# EUROPEAN PATENT SPECIFICATION

(11) **EP 2 460 279 B1**
(45) Date of publication and mention of the grant of the patent: **23.08.2017**
(21) Application number: 10804669.9
(22) Date of filing: 26.07.2010
(51) Int. Cl.: G06Q 10/10

(54) **INFORMATION DISPLAY METHOD FOR PORTABLE TERMINAL AND APPARATUS USING THE SAME**
INFORMATIONSANZEIGEVERFAHREN FÜR EIN TRAGBARES ENDGERÄT UND VORRICHTUNG, DIE DIESES VERWENDET
PROCÉDÉ D'AFFICHAGE D'INFORMATIONS POUR TERMINAL PORTABLE ET APPAREIL UTILISANT CE DERNIER

(30) Priority: 27.07.2009 KR 20090068456
(43) Date of publication of application: 06.06.2012
(73) Proprietor: Samsung Electronics Co., Ltd., Suwon-si, Gyeonggi-do, 443-742 (KR)
(72) Inventor: UM, Tae Won, Seoul 137-074 (KR); SHIN, Dong Jun, Seoul 133-731 (KR); KIM, Kyoung Taek, Seongnam-si Gyeonggi-do 463-713 (KR); KIM, Hyang Ah, Seongnam-si Gyeonggi-do 463-753 (KR); KIM, Kyung Hwa, Seoul 137-070 (KR)
(74) Representative: HGF Limited
(86) International application number: PCT/KR2010/004870
(87) International publication number: WO 2011/013956

(56) References cited:
- WO-A1-2005/025191
- KR-A- 20060 007 280
- KR-A- 20080 096 255
- US-A1- 2002 136 378
- US-A1- 2006 135 220
- US-A1- 2009 063 967

## Description

### Technical Field

The present invention relates the field of portable terminals, and more particularly, to a device capable of searching and displaying information related to a corresponding user function.

### Background Art

A portable terminal is a device that supports a variety of user functions based on its mobility, and has found wide application because of its easy use and portability.

Portable terminals generally have a specific function module mounted therein for supporting a corresponding function. For example, the portable terminal may include a file search module for the playing of stored image files, an MP3 player module for the playing of music files, a camera module for the collection of pictures, or the like. Each of the above-mentioned modules is executed inside the portable terminal so as to support the corresponding function and may be activated under the user's control.

WO 2005/025191A1 discloses a mobile terminal and incoming/outgoing call history management method. An incoming/outgoing call detection section detects an incoming or outgoing phone call from or to another mobile terminal. An information acquisition section acquires related information concerning an incoming or outgoing call in response to detection of the incoming or outgoing call. US 2002/0136378A1 discloses a telephone memory aid that is focused on how to capture information during a telephone call and allow entry of information by the user or other party into a database that may be used in future calls.

### Disclosure of Invention

### Technical Problem

Therefore, the conventional portable terminal is no more than simple electronic equipment when a user does not directly control the modules in the conventional portable terminals. Accordingly, it is required for the portable terminal to be able to allow users to use certain services more conveniently and to support a corresponding service more intellectually.

### Solution to Problem

The present invention has been made in view of the above problems.

One aspect of the present invention provides an information display method of a portable terminal, the method being as defined by claim 1.

Another aspect of the present invention provides a portable terminal as defined by claim 5.

### Advantageous Effects of Invention

According to the information display method for a portable terminal and the portable terminal using the same according to an exemplary embodiment of the present invention, the portable terminal of the present invention may provide to users useful information related with a specific user initiated function.

### Brief Description of Drawings

The objects, features and advantages of the present invention will be more apparent from the following detailed description in conjunction with the accompanying drawings, in which:
FIG. 1 is a block diagram illustrating a configuration of a portable terminal according to an exemplary embodiment of the present invention;
FIG. 2 is a drawing illustrating a configuration of a controller of the present invention;
FIG. 3 is a drawing illustrating a screen interface depending on information display of a portable terminal according to a first embodiment of the present invention;
FIG. 4 is a drawing illustrating a screen interface depending on information display of a portable terminal according to a second embodiment of the present invention;
FIG. 5 is a drawing illustrating a screen interface depending on information display of a portable terminal according to a third embodiment of the present invention;
FIG. 6 is a drawing illustrating a screen interface depending on information display of a portable terminal according to a fourth embodiment of the present invention; and
FIG. 7 is a flowchart illustrating an information display method according to an exemplary embodiment of the present invention.

### Mode for the Invention

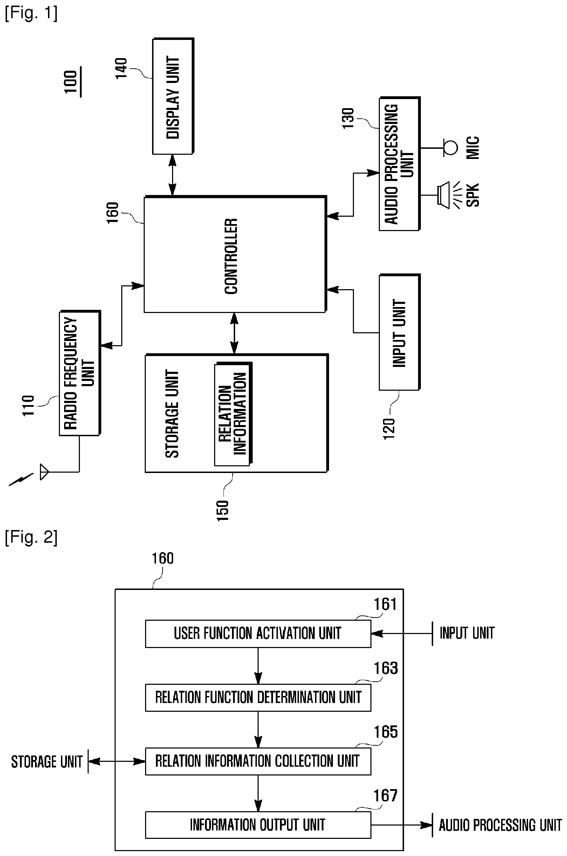

FIG. 1 is a schematic diagram illustrating a configuration of a portable terminal according to an exemplary embodiment of the present invention.

Referring to FIG. 1, the portable terminal according to an exemplary embodiment of the present invention may include a radio frequency unit 110, an input unit 120, an audio processing unit 130, a display unit 140, a storage unit 150 and a controller 160.

The portable terminal 100 according to an exemplary embodiment of the present invention controls search specific user functions and other related functions of the Portable terminal and outputs the searched related information through various routes, depending on given conditions. To this end, the portable terminal 100 may accumulate and store the relation information according to the given conditions, or to collect the relation information at a point of time according to the given conditions. Hereinafter, the configuration and roles of the portable terminal 100 will be described in detail.

The radio frequency unit 110 may form communication channels with base stations for the purpose of the data communications and voice conversations with other portable terminals. To this end, the radio frequency unit 110 may include a radio frequency transmission unit which up-converts and amplifies the frequency of transmitted signals, a radio frequency reception unit which low-noise amplifies the received signals and down-converts the frequency of received signals. In particular, the radio frequency unit 110 according to an exemplary embodiment of the present invention forms a communication channel to perform functions of the portable terminal, such as a voice call function, a message service function, an instant message service function, a video telephony function, and a data transmission function.

While performing a variety of the above-mentioned functions based on the radio frequency unit 110, the portable terminal 100 may collect information on functions related with the radio frequency unit 110, for example, information related with a schedule function, a photograph search function, a music play function and the like, generate the relation information and output the generated related information in the form of data or audio versions through a display unit or a speaker when performing the above-mentioned functions based on the radio frequency unit 110. That is, when a user performs the playing of background music or transmits photographs to another user while performing voice conversation based on the radio frequency unit 110, the portable terminal 100 may set the music play function and the photograph search function as a relation function with voice call function. Also, after storing the relation information generated by the above-mentioned functions in the storage unit 150, the portable terminal may output the relation information under the control of the controller 160. The input unit 120 may include a plurality of input keys and function keys for receiving information on the figures or letters and setting a variety of the functions. The function keys may include shift keys, side keys and shortcut keys, which may be set to perform a specific function. Also, the input unit 120 may generate key input signals inputted in connection with the control of the functions of the portable terminal 100 and transmit the generated key input signals to the controller 160. In particular, the input unit 120 according to an exemplary embodiment of the present invention may generate input signals under the user's control and transmit the generated input signals to the controller 160. Here, the input signals are generated in order to use the various functions of the portable terminal, such as a call function, a moving picture or music file play function, an image file search function, a TV watching function, a camera function, an audio recording function, or the like, for example. Also, when the relation information is outputted, the input unit 120 may generate input signals under the user's control. Here, the input signals are generated to check relation information, to execute, or cancel, the functions provided by the relation information. Meanwhile, the portable terminal 100 may further include a TV watching module, and/or a camera module in order to support the above-mentioned functions. The audio processing unit 130 may use a speaker (SPK) to play audio signals received through the radio frequency unit 110 under the control of the controller 160, or may transmit audio signals such as voice inputted from a microphone (MIC) to the radio frequency unit 110. In particular, when the audio signals are included in the relation information during the output of the relation information, the speaker (SPK) may output a corresponding audio signal. For example, when the relation information is weather information and the user function is alarm information, the speaker (SPK) may output the weather information corresponding to the relation information in the form of audio signals while generating an alarm at a specific point of time. The display unit 140 may display user data inputted by a user (including various menu screens of the portable terminal 100), information regarding function settings, or information regarding various functions provided to the user. This display unit 140 may be formed of a liquid crystal display (LCD), an organic light emitted diode (OLED). Furthermore, the display unit 140 may be included in an input unit when it is formed in the form of touch screen. In particular, the display unit 140 of the present invention may configure a screen for the output of the relation information. That is, the display unit 140 may, when activating the user functions of the portable terminal 100, output an image when an image corresponding to a corresponding user function exists. In this case, when relation information related with a function exists, the display unit 140 may output the relation information together with the image of the function.

A screen interface of the display unit 140 will be described in more detail with reference to the accompanying drawings. The storage unit 150 may store user's data, as well as a program required to execute the functions of the portable terminal 100. This storage unit 150 may mainly include a program area (not shown) and a data area (not shown).

The program area may store a user function module required for the functions such as an operating system (OS) for controlling the overall operations of the portable terminal 100, a call function, a moving picture or music file play function, an image file search function, a TV watching function, a camera function, an audio recording function. In particular, the program area according to an exemplary embodiment of the present invention may store a relation information processing application program which collects the relation information and outputs the relation information according to the activation of a specific user function. The relation information processing application program may include an relation function determination module for defining and determining a function related to the user function, an relation information collection module for collecting the relation information corresponding to the determined relation function, and a relation information output module for outputting the relation information through the display unit or the audio processing unit. This relation information processing application program may be loaded to the controller 160 according to the user's settings and operated with each function.

The data area is an area which stores data generated by the use of the portable terminal 100, and may store information corresponding to a phone book, audio data and corresponding contents or user's data. In particular, the data area according to an exemplary embodiment of the present invention may include function relation information that is a recorded function related with user function, relation information corresponding to a related function, history information on the history of a user function that may be used as relation information, and information generated from a configuration provided in the portable terminal.

Here, the information generated from the configuration may include a call history, data stored during the call function, a file play history, a file search history, searched file information, a TV watching history, information recorded during the TV watching, information on images taken by a camera, audio record information, which are generated when the portable terminal 100 executes the functions such as the call function, the moving picture or music file play function, the image file search function, the TV watching function, the camera function, the audio recording function and the like. The information generated thus may be used as relation information respectively. The function relation information is information that defines the state in which a specific user function is related with another user function. This function relation information may be designed by a designer. In detail, the designer may set another user function as a relation function of the corresponding specific user function upon the activation of a specific user function. For example, the designer may set the schedule function as a relation function when executing an alarm function for alarming at a right time or a preset time. Also, the function relation information may be generated by the usage history of the portable terminal. In more detail, when a user uses another user function which is repeatedly used or used with a frequency over a given number for a given time while using a specific user function, the portable terminal may set a corresponding user function as a relation function of the specific user function. For example, when the portable terminal user uses another user function, for example, a weather information collection function within a preset time, after executing an alarm function set to generate a bell or vibration at a certain point of time, the portable terminal 100 may set the weather information collection function as a relation function with the alarm function. Also, when the user function is set to a call function (i.e., an event), the relation function may be an information display function for outputting information on a phone book related with the phone number of another party, a location output function for outputting the location of user or another's terminal, an anniversary display function related with the other party's phone number, and a schedule information display function related with the opponent's phone number. Also, when the user function is a time-related function, it can be a function for displaying sensor information of a sensor which senses the external environment at a time set by an alarm function, a information display function of a previously stored schedule related with a corresponding time, and a function for checking the performance of an alarm function set for a given time. Thus, the relation functions can be another user function that is directly connected thereto by the input unit with respect to various user functions that may be provided by the portable terminal, and other user functions indirectly connected thereto according to the usage history of the portable terminal.

Here, when the function relation information is generated according to the usage history of the portable terminal, the function relation information may be automatically controlled according to changes of the usage history. For example, when the portable terminal user cancels a weather information viewing function and executes a music play function while satisfying a given condition, e.g., a pre-set number of iterations within a given time after executing the alarm function, the function relation information of the alarm function may be changed from the weather information collection function to the music play function, or the music play function may be added together with the weather information collection function. Here, when the input signals corresponding to the cancellation of the weather information viewing function are repeatedly inputted into the portable terminal over the preset number of times, the portable terminal is able to delete the weather information collection function which is set as a relation function of the alarm function.

Meanwhile, the above-mentioned function relation information may be configured in the form of a table that may be controlled by the user. To this end, the portable terminal may provide a menu in which a user may control the function relation information, and the user may control the function relation information through the menu. In this case, the portable terminal may support the selection of a direct mode in which the generation and management of the function relation information may be directly controlled by the input unit, or an indirect mode in which function relation information may be added or changed according to the usage history of the portable terminal as described above.

The controller 160 may control the overall operations of the portable terminal 100 and the flow of signals between internal elements thereof, and also control the data processing function. In particular, the controller 160, according to an exemplary embodiment of the present invention, may set the relation function of the user function, or determine the relation function related with a specific user function at one point of time selected from among right before, during and after the activation of specific user function, and collect the relation information corresponding to the related functions and output the collected relation information.

To this end, as shown in FIG. 2, the controller 160 may include a user function activation unit 161, a relation function determination unit 163, a relation information collection unit 165 and an information output unit 167. The user function activation unit 161 is configured to activate the user functions of the portable terminal according to the input signals inputted from the input unit 120. For example, when an input signal for activating the camera function is sent from the input unit 120, the user function activation unit 161 loads a user module for supporting the camera function stored in the storage unit 150 and executes the camera function based on the user module. In this case, the user function activation unit 161 may send to the relation function determination unit 163 information indicating that the camera function is scheduled to be activated. That is, the user function activation unit 161 sends the information related with the user function to be activated to the relation function determination unit 163 while supporting the activation of the user functions to be executed by the portable terminal 100.

The relation function determination unit 163 checks the relation function related with the user function to be activated, based on the information related with the user functions sent from the user function activation unit 161. To this end, the relation function determination unit 163 may check the function relation information stored in the storage unit 150. Through the function relation information, it checks the relation function related with the user functions to be activated and sends corresponding relation function information to the relation information collection unit 165. The relation information collection unit 165 collects the relation information, based on the relation function sent from the relation function determination unit 163. To this end, the relation information collection unit 165 may collect the history information of specific user function set as a relation function, or may collect the relation information by activating the user function set as a relation function. For example, when the relation function is set as a call function, the relation information collection unit 165 may check information on a call log and collect information according to a preset condition, (e.g., information on recent call among call log information). Also, when the relation function is set as a weather information collection function, the relation information collection unit 165 may collect weather information through a widget or through a server that allows or enables network (e.g., internet or Web) access. A widget, as referred to herein, represents a program or application or API (application program interface) that may be used to collect the related information. The relation information collection unit 165 may store the relation information in the storage unit 150, after collecting the relation information.

The information output unit 167 is configured to output the relation information, which is collected by the relation information collection unit 165, on the display unit 140 or the audio processing unit 130. For example, when the relation information is information which is composed of text and image, the information output unit 167 may control the output the relation information onto a preset area of the display unit 140. Also, when the relation information is text information and set to be outputted in the form of audio signal, the information output unit 167 may control the output of the relation information through the audio processing unit 130. Also, the information output unit 167 may control the execution of a specific operation. For example, activate a vibration motor or output a preset audio signal so as to allow a user to recognize that the relation information is outputted, together with the output of the relation information.

As described above, with the activation of the specific user functions, the portable terminal 100 according to an exemplary embodiment of the present invention may control determination of a the relation function related with a corresponding user function, collect the relation information corresponding to the relation function and output a corresponding relation information. As a result, when a user function is activated, the portable terminal user may obtain desired information without any additional input procedures by checking the relation information on the related functions related with the activated user functions.

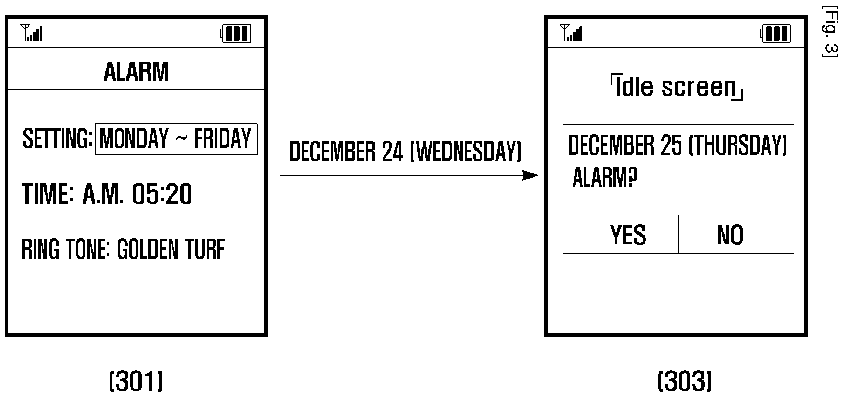

FIG. 3 is illustrates a screen interface for displaying information relating to an alarm function among the display of information of a portable terminal according to a first embodiment of the present invention. A user function applied to FIG. 3 is an alarm function, and a function which is set as a relation function of the alarm function is a user function performance check function.

Referring to FIG. 3, the portable terminal of the present invention can provide an interface-like screen 301 according to an alarm function setting request of user. That is, the portable terminal includes a menu for setting an alarm function. When the alarm function setting menu is selected according to the manipulation of the input unit by user, the portable terminal can provide an interface including an item for setting day, an item for setting time, and an item for setting alarm type, (see screen 301). When an alarm setting interface, as shown in screen 301, is outputted to the display unit, the portable terminal user can perform the setting of each item by using the input unit. For example, the portable terminal user can set an item for setting day as "Monday through Friday" by using the input unit. To this end, the item for setting day can include a setting list for individual weekdays e.g., "Monday through Friday", combinations of days, e.g., "Monday, Tuesday, and Friday," "Monday through Saturday", or "Monday through Sunday", or "Everyday". In addition, each item described above may be changed by a toggle method according to an input unit signal. Moreover, the portable terminal user can change a time setting item by using the input unit. For example, the user can set a time as "A.M. 05:20". Furthermore, a user can set the type of alarm by using the input unit. To this end, the portable terminal can provide an item for setting a vibration, a ring tone, or a lamp as the type of alarm. In case of a ring tone alarm type, the portable terminal can provide an additional item capable of selecting from a variety of melodies. As shown in screen 301, when confirmation or storing is performed after a user sets each item, the portable terminal can control the performance of the alarm function based on information relating to set items.

In case the today's date is December 24 (Wednesday), and the next day's date is December 25 (Thursday) and is a national holiday, the portable terminal can activate the function of checking the performance of a specific user function, as shown in screen 303. In more detail, the portable terminal 100 can recognize that December 25 is set as a national holiday through the check of a calendar function. Moreover, it can the performance of the alarm function set at A.M. 05:20 during "Monday through Friday" according to the setting of alarm function. At this time, when alarm function is performed as a user function performance confirmation function, the portable terminal 100 can perform a task which confirms whether to perform the alarm function for December 25 at the alarm time. For example, the portable terminal can output a pop-up window asking about the performance of alarm function for December 25. At this time, the portable terminal can perform an operation for informing the user through the output of pop-up window, and a corresponding vibration signal or preset audio signal, if desired, while outputting the pop-up window. In the case the portable terminal user selects "Yes", in response to the screen 303, corresponding to a confirmation in the pop-up window, the device can perform the alarm function for December 25. Moreover, in case a user selects "No", the device can inhibit the performance of the alarm function for December 25. Such limitation of alarm function is restricted only for December 25, so that the portable terminal can control the output of an alarm in other days with a preset condition, i.e., to output an alarm at A.M. 05:20 during "Monday through Friday".

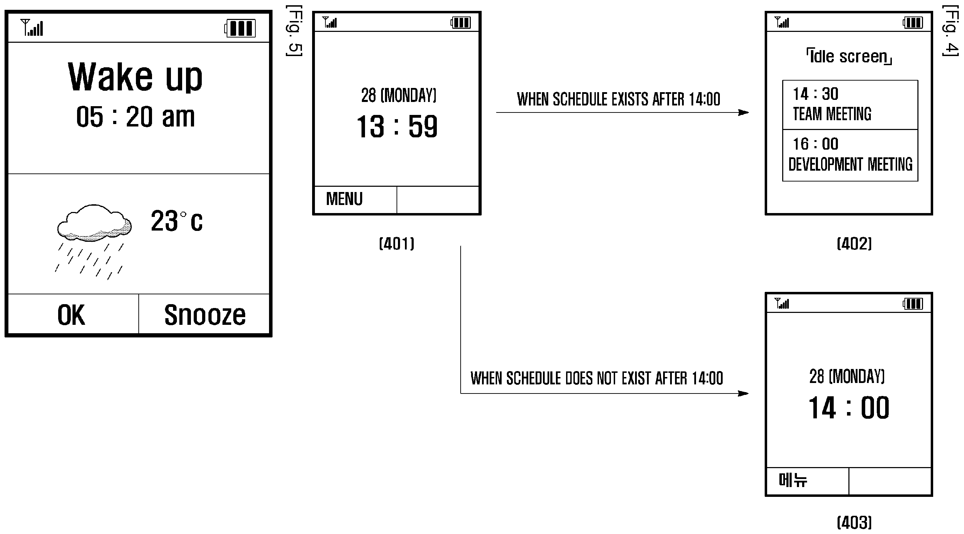

FIG. 4 is a illustrates an example of a screen interface that displays information relating to a schedule function among the display of information according to a second embodiment of the present invention.

A user function applied to FIG. 4 may be a time alarm function and a function which is set as a relation function of the time alarm function may be a schedule function.

Referring to FIG. 4, a portable terminal of the present invention can display a current time to a display unit depending on the performance of the time alarm function as shown in screen 401. For example, in case the current time is 13:59 28th, the portable terminal can display corresponding time information to a given area of the display unit with a preset form. In the meantime, in the state where the screen 401 is displayed, as time elapses and it becomes 14:00, the portable terminal can output information regarding the time 14:00 as an audio signal according to a time alarm function, e.g. right time alarm function. In addition, the portable terminal can check a schedule function that is related to a time alarm function. That is, the portable terminal can check whether a memorized schedule information exists within a preset time around the 14:00. In case schedule information exists after 14:00, the portable terminal collects corresponding schedule information. When the schedule information includes items such as "4:30 team meeting" and "16:00 development meeting", the portable terminal can display the collected items (i.e., information) through a preset form, e.g., a pop up window as shown in screen 402. In the meantime, in case specific schedule information does not exist after 14:00, the portable terminal can perform the time alarm function for 14:00 similar to that shown in screen 403. That is, the portable terminal can display information regarding 14:00 to a given area of the display unit.

FIG. 5 is illustrates a screen interface for explaining the display of relation information according to an alarm function and a weather information collection function related to the alarm function among information display functions according to a third embodiment of the present invention. It is assumed that portable terminal user established an alarm for A.M. 05:20 through a menu selection for setting alarm function, as previously described.

Referring to FIG. 5, when time elapses and it becomes 05:20, the portable terminal of the present invention can output an alarm that is set according to a preset alarm function. For example, in case the user sets a ring tone "man story" for A.M. 05:20, the portable terminal can output the tone "man story" through an audio processing unit at A.M. 05:20. In the meantime, in case the alarm function is activated, the portable terminal checks a relation function which is related to the alarm function. To this end, the portable terminal checks that function relation information that is stored in storage and can check a relation function that is related to the alarm function. At this time, in case a weather information collection function is related to the alarm function in the function relation information, the portable terminal collects weather information. To this end, the portable terminal activates a function capable of collecting weather information, through, for example, a widget function (an application), or a web browser,. Such collected weather information may be temporarily stored in the storage unit, and may be outputted to the display unit. At this time, the portable terminal can simultaneously output the weather information with the information depending on the alarm function, or can output the weather information after the alarm function is terminated.

In more detail, the portable terminal can control the output of alarm information to the display unit according to the activation of alarm function while outputting alarm information as an audio signal. Further, it can output alarm information together with the weather information to a given area of the display unit to which the alarm information is outputted. After the alarm information is outputted as an audio signal, the portable terminal can output the weather information as an audio signal, when the output of alarm information is stopped by user or the output of alarm information is stopped after a set time has elapsed. The portable terminal can output the weather information to the display unit for a preset time, or can remove the weather information from the display unit when an input signal corresponding to the confirmation issued by the user is sent. Here, the portable terminal can control the performance of the collection of weather information prior to A.M. 05:20 while not collecting the weather information according to the weather information collection function while performing an alarm function for A.M. 05:20.

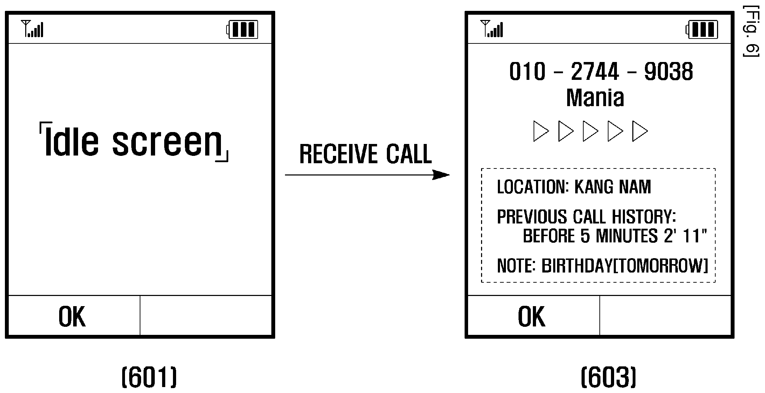

FIG. 6 is illustrates an exemplary screen interface for explaining the output of relation information related to a call function among information display functions according to a fourth embodiment of the present invention.

Referring to FIG. 6, according to an exemplary embodiment of present invention, after the supply of power, the portable terminal can initialize each configuration and can output an idle screen to the preset display unit, as shown, for example, in screen 601. In case an action for forming a call channel is received from another party's terminal, the portable terminal can display a telephone number of the other party's terminal and a name corresponding to the telephone number to the display unit as shown in exemplary screen 603. The portable terminal can further check a function related to the call function. Here, in case the function related to the call function is at least one of, for example, an output function of call history information, an output function of phone book information, and an output function of the other party's terminal location information, the portable terminal can control the collection of information corresponding to each relation function.

In more detail, when a call is received, the portable terminal searches a call history having the same telephone number as the received phone number. When the call history information corresponding to the other party's phone number is searched, the portable terminal can output this information to the display unit. For example, in case the previous call history with the other party's terminal indicates five (5) prior calls and an average conversation time of 2 minutes 11 seconds, the portable terminal can output corresponding information to the display unit. Moreover, when a call is received, the portable terminal can search phone book information based on the other party's phone number so as output phone book information. And when information according to a preset condition, e.g., the birthday (i.e., birth anniversary) of the other party's terminal user, exists within a preset time among the information stored in the phone book, the portable terminal can output birthday information as the phonebook information. Information regarding other similar occasions, e.g., wedding anniversary, graduation, meetings, etc., may also be display. The portable terminal can further request location information to the other party's terminal so as to output location information of the other party's terminal. When the location information is received from the opponent terminal, the portable terminal can output the received location information to a given area of the display unit. For example, in case the message or name "KangNam" is received from the other party's terminal as the location information, this information may be outputted to the display unit. A service registration for a specific service, e.g., the sharing of location information like "finding friend", with the other party's terminal may be performed so as to enable the service to output of location information.

In the meantime, in the output of relation information related to the illustrative call function, it is illustrated that the portable terminal outputs relation information in case of receiving a call, but it would be recognized that the present invention is not limited to illustrative example. That is, the portable terminal may be identically applied for transmission, i.e. when the portable terminal forms a call as well as for call reception.

As described in the above, the portable terminal according to an exemplary embodiment of the present invention collects relation information according to a corresponding specific user function which is to being performed, and can control the output of the relation information that is collected at the point of time of the activation of the user function through the display unit or the audio processing unit.

Hereinafter, the information display method of a portable terminal according to an exemplary embodiment of the present invention is illustrated with reference to the drawings.

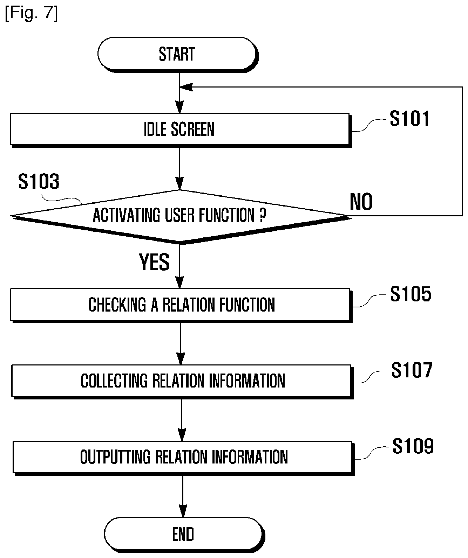

FIG. 7 is a flowchart for illustrating the information display method of a portable terminal according to an exemplary embodiment of the present invention.

Referring to FIG. 7, in the portable terminal information display method of the present invention, when power is supplied to the portable terminal, each configuration of the portable terminal is initialized by using the supplied power and a preset idle screen may be outputted when the initialization process is completed (S101). The portable terminal next can check whether a user function, e.g., time alarm function, alarm function, call function, moving picture or music file play function, image file search function, watching TV function, camera function, and audio recording function, are performed (S103). In case a specific user function is not activated at step 103, the portable terminal can maintain the output state of idle screen (S101). Alternatively, the portable terminal may be converted into a sleep mode to conserve power, after a preset time has elapsed after the output of idle screen.

However, in case a specific user function is activated at step 103, the portable terminal checks whether a relation function related to user function currently being activated or to be activated (S105). To this end, the portable terminal can refer to the function relation information that matches the relation function that is set according to a user function stored in the storage. As described above, the function relation information may be information that a designer artificially directly sets through the transmission of appropriate input signals, or information that a user artificially directly sets by using the input unit. Moreover, in the function relation information, specific user functions that are to be used over preset times for a preset hour according to a usage history of the portable terminal may be established as a mutual relation function. In case the relation function of the user function to be activated is determined at step 105, the portable terminal can collect relation information corresponding to the relation function (S107). The collection of relation information may be progressed by a plurality of methods according to relation function.

For example, in case the relation function is a phone book information output function, the portable terminal can collect specific information of the phone book stored in the storage. And in case the relation function is a location output function that outputs the location of user's or a calling party's terminal, the portable terminal can collect information of its own location through a GPS module or a radio frequency unit, or by receiving the location information of the calling party's terminal from the calling party's terminal.

Moreover, in case the relation function is an anniversary display function, the portable terminal can determine whether to collect anniversary information by comparing a current date or time based on the anniversary information described in a specific object. And in case the relation function is an information output function regarding the external environment at a time designated by the alarm function, the portable terminal collects sensor information from various sensors, which can measure the external environment at a corresponding time, for example, a temperature sensor, a humidity sensor, a gravity sensor, and an acceleration sensor, and can utilize the information provided by these sensors as the relation information. Moreover, the portable terminal can perform the collection of information relating to the individual, or combinations of the, relation functions described above. In the meantime, in case the relation information is collected at step 107, the portable terminal can output the collected relation information through at least one among the display unit and the audio processing unit (S109).

As described above, an information display method of a portable terminal and a portable terminal using the same according to an exemplary embodiment of the present invention collect relation information corresponding to a relation function related to user function to be activated and outputs the collected relation information, so that various information may be timely provided to the user..

The above-described methods according to the present invention can be realized in the controller in hardware or as software or computer code, which can be stored in a recording medium such as a CD ROM, an RAM, a floppy disk, a hard disk, or a magneto-optical disk or downloaded over a network. The computer program can be provided from an external source which is electronically downloaded over a network, e.g., Internet, POTS, so that the methods described herein can be rendered in such software using a general purpose computer, or a special processor or in programmable or dedicated hardware, such as an ASIC or FPGA. As would be understood in the art, the computer, the processor or the programmable hardware include memory components, e.g., RAM, ROM, Flash, etc. that may store or receive software or computer code that when accessed and executed by the computer, processor or hardware implement the processing methods described herein. The code when loaded into a general purpose computer transformed the general purpose computer into a special purpose computer that may in part be dedicated to the processing shown herein. In addition, the computer, processor or dedicated hardware may be composed of at least one of a single processor, a multi-processor, and a multi-core processor. Although exemplary embodiments of the present invention have been described in detail hereinabove, it should be clearly understood that many variations and modifications of the basic inventive concepts herein taught which may appear to those skilled in the present art will still fall within the scope of the present invention, as defined in the appended claims.

## Claims

1. An information display method of a portable terminal (100), the method comprising:
activating an alarm function of the portable terminal based on a user input for setting an alarm to be output at a set time of a day;
while the alarm function is activated, and without receiving user input:
prior to arrival of the set time, automatically collecting weather information through a server that enables internet access using a weather information collection function; and
when the set time arrives, outputting the alarm and simultaneously displaying the collected weather information.

2. The method of claim 1, wherein alarm information is displayed simultaneously with the displayed weather information.

3. The method of claim 1, wherein:
the alarm function, while activated, is set to output an alarm at a set time for each of plural predetermined days of the week.

4. The method of claim 1, wherein the alarm is output as an audio signal and the weather information is further output as an audio signal.

5. A portable terminal (100) comprising:
a display unit (140);
a processor (160) in communication with a memory (150), the memory including code which when accessed by the processor causes the processor to:
activate an alarm function of the portable terminal based on a user input for setting an alarm to be output at a set time of a day;
while the alarm function is activated, and without receiving user input:
prior to arrival of the set time, automatically collect weather information through a server that enables internet access using a weather information collection function of the portable terminal; and
when the set time arrives, output the alarm and simultaneously cause the display unit to display the collected weather information.

6. The portable terminal of claim 5, wherein alarm information is displayed simultaneously with the displayed weather information.

7. The portable terminal of claim 5, wherein:
the alarm function, while activated, is set to output an alarm at a set time for each of plural predetermined days of the week.

8. The portable terminal of claim 5, wherein the alarm is output as an audio signal and the weather information is further output as an audio signal.

## Patentansprüche

1. Ein Informationsanzeigeverfahren eines tragbaren Endgeräts (100), wobei das Verfahren umfasst:
Aktivieren einer Alarmfunktion des tragbaren Endgeräts auf der Basis einer Benutzereingabe zum Einstellen eines Alarms, der zu einer festgelegten Zeit eines Tages auszugeben ist;
während die Alarmfunktion aktiviert ist, und ohne Benutzereingabe zu empfangen:
vor Erscheinen der festgelegten Zeit, automatisches Sammeln von Wetterinformation durch einen Server, der Internetzugang unter Verwendung einer Sammelfunktion für Wetterinformation ermöglicht; und
wenn die festgelegte Zeit erscheint, Ausgeben des Alarms und simultane Anzeige der gesammelten Wetterinformation.

2. Das Verfahren nach Anspruch 1, wobei Alarminformation simultan mit der angezeigten Wetterinformation angezeigt wird.

3. Das Verfahren nach Anspruch 1, wobei:
die Alarmfunktion, während aktiviert, eingestellt ist, einen Alarm zu einer festgelegten Zeit für jeden von mehreren vorbestimmten Tagen der Woche auszugeben.

4. Das Verfahren nach Anspruch 1, wobei der Alarm als ein Audiosignal ausgegeben wird und die Wetterinformation ferner als ein Audiosignal ausgegeben wird.

5. Ein tragbares Endgerät (100), umfassend:
eine Anzeigeeinheit (140);
einen Prozessor (160) in Kommunikation mit einem Speicher (150), wobei der Speicher Code einschließt, der, wenn vom Prozessor angesteuert, bewirkt, dass der Prozessor Folgendes tut:
Aktivieren einer Alarmfunktion des tragbaren Endgeräts auf der Basis einer Benutzereingabe zum Einstellen eines Alarms, der zu einer festgelegten Zeit eines Tages auszugeben ist;
während die Alarmfunktion aktiviert ist, und ohne Benutzereingabe zu empfangen:
vor Erscheinen der festgelegten Zeit, automatisches Sammeln von Wetterinformation durch einen Server, der Internetzugang unter Verwendung einer Sammelfunktion für Wetterinformation des tragbaren Endgeräts ermöglicht; und
wenn die festgelegt Zeit erscheint, Ausgeben des Alarms und simultanes Bewirken, dass die Anzeigeeinheit die gesammelte Wetterinformation anzeigt.

6. Das tragbare Endgerät nach Anspruch 5, wobei Alarminformation simultan mit der angezeigten Wetterinformation angezeigt wird.

7. Das tragbare Endegerät nach Anspruch 5, wobei:
die Alarmfunktion, während aktiviert, eingestellt ist, einen Alarm zu einer festgelegten Zeit für jeden von mehreren vorbestimmten Tagen der Woche auszugeben.

8. Das tragbare Endgerät nach Anspruch 5, wobei der Alarm als ein Audiosignal ausgegeben wird und die Wetterinformation ferner als ein Audiosignal ausgegeben wird.

## Revendications

1. Un procédé d'affichage d'informations d'un terminal portatif (100), le procédé comprenant :
l'activation d'une fonction d'alarme du terminal portatif en fonction d'une entrée d'utilisateur de façon à régler une alarme destinée à être produite en sortie à une heure définie d'un jour,
pendant que la fonction d'alarme est activée, et sans la réception d'une entrée d'utilisateur :
avant l'arrivée de l'heure définie, le recueil automatique d'informations météorologiques par l'intermédiaire d'un serveur qui permet d'accéder à l'Internet au moyen d'une fonction de recueil d'informations météorologiques, et
lorsque l'heure définie arrive, la production en sortie de l'alarme et l'affichage simultané des informations météorologiques recueillies.

2. Le procédé selon la Revendication 1, où les informations d'alarme sont affichées simultanément avec les informations météorologiques affichées.

3. Le procédé selon la Revendication 1, où :
la fonction d'alarme, pendant qu'elle est activée, est réglée de façon à produire en sortie une alarme à une heure définie chaque jour d'une pluralité de jours prédéterminés de la semaine.

4. Le procédé selon la Revendication 1, où l'alarme est produite en sortie sous la forme d'un signal audio et les informations météorologiques sont également produites en sortie sous la forme d'un signal audio.

5. Un terminal portatif (100) comprenant :
une unité d'affichage (140),
un processeur (160) en communication avec une mémoire (150), la mémoire contenant du code qui, lorsqu'il est accédé par le processeur, amène le processeur à :
activer une fonction d'alarme du terminal portatif en fonction d'une entrée d'utilisateur de façon à régler une alarme destinée à être produite en sortie à une heure définie d'un jour,
pendant que la fonction d'alarme est activée, et sans la réception d'une entrée d'utilisateur :
avant l'arrivée de l'heure définie, recueillir automatiquement des informations météorologiques par l'intermédiaire d'un serveur qui permet d'accéder à l'Internet au moyen d'une fonction de recueil d'informations météorologiques du terminal portatif, et
lorsque l'heure définie arrive, produire en sortie l'alarme et simultanément amener l'unité d'affichage à afficher les informations météorologiques recueillies.

6. Le terminal portatif selon la Revendication 5, où des informations d'alarme sont affichées simultanément avec les informations météorologiques affichées.

7. Le terminal portatif selon la Revendication 5, où :
la fonction d'alarme, pendant qu'elle est activée, est réglée de façon à produire en sortie une alarme à une heure définie chaque jour d'une pluralité de jours prédéterminés de la semaine.

8. Le terminal portatif selon la Revendication 5, où l'alarme est produite en sortie sous la forme d'un signal audio et les informations météorologiques sont également produites en sortie sous la forme d'un signal audio.
